Europäisches Patentamt

European Patent Office

Office européen des brevets

(11) Publication number: **0 171 378**
**B1**

(12) **EUROPEAN PATENT SPECIFICATION**

(45) Date of publication of patent specification: **13.06.90**

(21) Application number: **85850248.7**

(22) Date of filing: **26.07.85**

(51) Int. Cl.⁵: **G 01 C 19/56,** G 01 P 9/04

(54) Angular rate sensor.

(30) Priority: **27.07.84 US 635116**

(43) Date of publication of application:
**12.02.86 Bulletin 86/07**

(45) Publication of the grant of the patent:
**13.06.90 Bulletin 90/24**

(84) Designated Contracting States:
**AT BE CH DE FR GB IT LI LU NL SE**

(56) References cited:
**EP-A-0 084 704**
**US-A-2 974 530**

(73) Proprietor: **WATSON INDUSTRIES, INC.**
**3041 Melby Road**
**Eau Claire Wisconsin 54701 (US)**

(72) Inventor: **Watson, William S.**
**3041 Melby Road**
**Eau Claire Wisconsin 54701 (US)**

(74) Representative: **Ström, Tore et al**
**Ström & Gulliksson AB Studentgatan 1 P.O. Box 4188**
**S-203 13 Malmö (SE)**

EP 0 171 378 B1

## Description

Technical Field of the Invention

The present invention relates to the field of angular rate sensors, and more particularly to vibrating element sensors.

Background of the Invention

The theoretical basis for present day angular rate sensing was developed at least as early as 1850, when the French physicist, Jean Bernard Foucault, conducted a detailed investigation of the principles of conservation of momentum. In one experiment, he used a gyroscope to demonstrate the rotation of the earth. In another experiment, he discovered that the plane of transverse oscillation of a thin, vibrating rod clamped in the chuck of a lathe tends to remain fixed in space independent of the rotation of the chuck. Although these experiments clearly demonstrated the theoretical possibility for angular rate sensors, it was not until the early 20th century and the advent of instrument airplane flight that the necessity of developing a practical rate sensor was recognized.

Although from a theoretical standpoint the principles of conservation of momentum could be employed to produce an angular rate sensor using either a gyroscope or a vibrating element, gyroscopes proved to be much simpler to implement. Thus, the rate gyroscope naturally became the first commercially available type of angular rate sensor. However, even though it has been continually refined over the decades the rate gyro has several inherent limitations which can never be completely overcome. These include the sensing errors introduced by wear on the bearings which are essential to gyroscopic devices, and relatively high power consumption.

In response to the disadvantages of the rate gyro, many different types of vibrating element sensors have been developed, including vibrating wire, vibrating beam and vibrating rod sensors. Vibrating wire and beam sensors must be supported on both ends, and thus are particularly susceptible to sensing errors caused by thermal expansion and contraction, which have been found quite difficult to accommodate or compensate for. The vibrating rod sensor comprises at least one elongate vibrating element, of circular or rectangular cross section, which is fixed at one end to a mounting base and free on the other end. The rod is driven for vibration, typically at its resonant frequency, in a "drive" or "guide" plane such that under zero angular rotation conditions, the rod ideally has no component of motion normal or transverse to the drive plane. Typically, the element is constrained under zero angular rate conditions to movement in the drive plane by electromagnetic forces, mechanical configuration, material properties of the vibrating element, or a combination thereof. Thus, when the rod is rotated about its longitudinal or "sense" axis, the angular rate of turn may be detected by sensing the deflection of the rod out of the drive plane, or in other words the component of motion of the rod which is induced transverse to the drive plane, as caused by Coriolis forces. This transverse or "sense" motion is typically measured using piezoelectric bender elements which may be connected, or attached, or integral with the vibrating rod, or using electromagnetic elements such as magnetic forces and coils.

One important aspect of vibrating rod sensors concerns the vibrating characteristics of the rod. The natural resonant frequencies of the rod must be considered both for the purpose of controlling the frequency of vibration in the drive plane and for the purpose of providing predictable and measurable sense responses. The two resonant frequencies of concern are the drive plane resonant frequency and the sense motion resonant frequency. The peak of the sense response is at the resonant frequency of sense motions. Because energy from the drive plane which is converted to sense motion by angular rotations of the sensor is transferred at the drive resonance frequency, the best signal gain may be obtained by matching the drive and sense resonant frequency characteristics of the element. Thus, such a design has been adopted for many prior art devices. For instance, U. S. Patent No. 2,513,340 to Lyman, U. S. Patent No. 2,544,646 to Barnaby et al and U. S. Patent No. 2,974,530 to Jaouen all teach that it is preferable that the drive and sense resonant frequencies be equal. There are, however, as will be demonstrated below in the ensuing specification, inherent difficulties and limitations in systems adopting this approach. Another prior art device is known from EP-A-0 084 704. This document discloses an angular rate sensor apparatus which uses electromagnetic drive fields for the vibratory element and an electromagnetic or a capacitive sensing configuration employing two identical vibrating elements vibrating in opposition to one another.

In addition to considerations relating to the resonant frequency characteristics, there are other aspects of vibrating rod sensor design which have a critical influence on the practical usefulness of such sensors. For instance, a sensor must be designed so that external shock vibrations or the like do not cause undue extraneous and erroneous angular rate signals to be developed. Similarly, vibrating rod sensors must be designed such that vibrations from the drive plane are not transferred by acoustic or sonic energy propagation into sense motion, which also has the result of producing erroneous angular rate signals. Furthermore, in the case of wholly electromagnetic devices, i.e., devices that employ electromagnetics to both drive the element and to sense the rate of turn, cross coupling between the drive and sense coils must be accommodated or compensated for. Moreover, electromagnetic devices must also accommodate the effects of externally generated magnetic fields such as the earth's magnetic field.

There are other significant design barriers which, must be overcome in order to provide a vibrating rod sensor that may be utilized over a wide range of temperatures, or in high shock environments. With regard to the former, materials and designs must have a low sensitivity to variations in temperature, both in terms of physical expansion and contraction of the components and in terms of the electromagnetic or electrical characteristics of the materials. Moreover, with regard to the latter, the materials must be selected to survive high G forces as are often found in military applications and in some commercial applications as well. Moreover, as is often necessary for military applications, a sensor may have to have a short warm-up time such that warm-up transients do not initially produce erroneous rate of turn measurements.

As will be seen from the ensuing specification, the present invention as claimed in independent claim 1 and depended claims deals with each and every one of the above-mentioned design obstacles to provide a practical form of a vibrating rod sensor which is capable of performing up to exacting military standards or in less demanding commercial environments.

The invention provides an angular rate sensor of improved sensitivity and bandwidth, and of improved accuracy and reliability, as will be demonstrated in the ensuing specification and drawing.

Brief Description of the Drawings

FIGURE 1 is a longitudinal cross sectional view of an angular rate sensor according to the present invention;

FIGURE 2 is a cross sectional end view taken along the lines 2-2 of FIGURE 1 of an angular rate sensor according to the present invention;

FIGURE 3 is a cross sectional end view taken along the lines 3-3 of FIGURE 1 of an angular rate sensor according to the present invention;

FIGURE 4 is an exploded perspective view of an electromagnetic core assembly according to the present invention;

FIGURE 5 is a plan view of the core assembly of FIGURE 4;

FIGURE 6 is a block diagram of the drive control and sensing circuits of an electromagnetic angular rate sensor according to the present invention;

FIGURE 7 is an illustration of the technique for magnetizing the vibrating element of the present invention;

FIGURE 8 is a diagrammatic perspective view of an angular rate sensor using capacitive sensing according to the present invention;

FIGURE 9 is an electrical schematic diagram of the electrical circuit preferably employed with the sensor of FIGURE 8;

FIGURES 10 and 11 are alternate embodiments of capacitive sensing circuits according to the present invention;

FIGURE 12 is a plot of response characteristics for a typical vibrating element;

FIGURE 13 is a plot of a system response of a vibrating element wherein the natural resonant drive frequency is equal to the natural resonant sense frequency;

FIGURE 14 is a plot illustrating the affect of differences between drive resonant frequency and the sense resonant frequency on amplitude output and phase measurements;

FIGURE 15 is a plot of the response curve of the vibrating element sensor according to the present invention;

FIGURE 16 is a perspective view of the housing of electrical and mechanical components of the angular rate sensor according to the present invention; and

FIGURE 17 is a plan view of the housing of FIGURE 16 with the top removed.

Detailed Description of the Invention
Electromagnetic Sense Embodiment

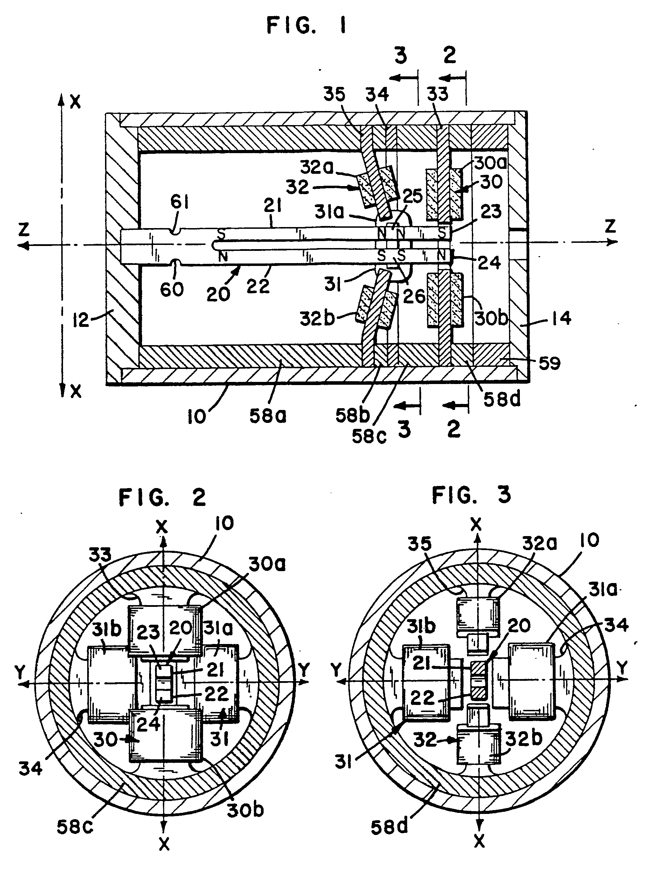

There are disclosed herein-two principal embodiments, one "capacitive" and one "electromagnetic," of a vibrating rod angular rate sensor according to the present invention. Referring first to FIGURES 1, 2 and 3, there is shown generally the wholly electromagnetic embodiment of the angular rate sensor according to the present invention. An elongate metal cylinder or shell 10 is provided, within which vibrating element 20 is supported by base support 12, which additionally functions as a cap for one end of shell 10. Element 20 is mounted to support 12 so that the central longitudinal axis of element 20 lies substantially coincidental with the longitudinal central axis of cylinder 10. Preferably, element 20 and base 12 are rigidly joined by interference fitting so as to be substantially immovable with respect to one another.

As shown in the drawing, the longitudinal axis of element 20 is denoted the Z axis, which in Figure 1 lies in the plane of the paper and in Figures 2 and 3 normal to the paper, at the intersection of the X and Y axes. In Figure 1 the X axis also lies in the plane of the paper, perpendicular to the Z axis, with the Y axis being normal to the XZ plane. In Figures 2 and 3, the X and Y axes lie in the plane of the paper.

Vibrating element 20 is generally "forked" and includes two rods or "tines" 21 and 22 each having a rectangular cross section. By a process that will be described below in more detail, tines 21 and 22 are each magnetized to have two regions of high magnetic field. With regard to tine 21, a first region of magnetization is provided to extend from a first north pole at a point 25 in mid-element to a south pole at free end 23. A second region of magnetization extends from a second north pole abutting the first north pole at point 25, toward a second south pole near the mounting end of the element. Similarly, tine 22 also includes two regions of magnetization abutting mid-element at a point 26, only the regions of tine 22 have their poles oriented in opposition to those of tine 21. Thus, for each element there is provided two areas of high external or surface magnetic flux, in particular at ends 23 and 24 and generally about points 25 and 26.

Supported inside shell 10 and positioned about element 20 are three coil assemblies generally denoted 30, 31 and 32. As may be seen better with reference to Figures 2 and 3, each of these assemblies includes a pair of coils, denoted as a and b, positioned on opposite sides of element 20, with each coil being wound about the opposing posts of the respective core elements generally designated 33, 34 and 35, for the respective assemblies 30, 31 and 32.

Coil assembly 30 performs as the "drive coil," and has its poles oriented parallel to the plane (i.e., the XZ plane) of tines 21 and 22. Coil assembly 31 acts as the "sense coil," and is oriented with its poles (and corresponding gap) parallel to the plane of the tines and as close to the free ends of the elements 23 and 24 as practical, given electromagnetic coupling restrictions as between coil assembly 30 and 31, which coupling must be accommodated and compensated for in order to assure accurate angular rate detection. Coil assembly 32 acts as the "resonance coil," and has its poles oriented in the plane of the tines, as the drive coils, such that some level of coupling exists between the resonance coil and the drive coil. As may be seen with reference to Figure 1, the core 35 for resonance coil 32 is slightly angled, so that coils 32 is as close as physically possible to the high magnetic flux fields about points 25 and 26.

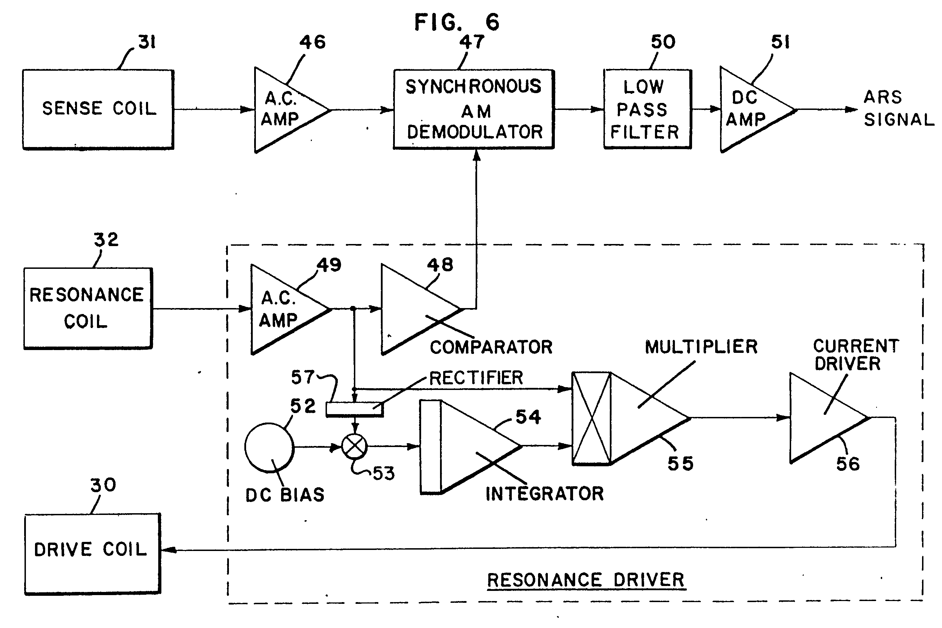

Referring to Figure 6 there is shown in block diagrammatic form the electrical drive control and sensing circuits preferably connected to the sense, drive and resonance coils to maintain resonant vibration of the tines in the drive plane and to demodulate and condition sense motion signals produced by the sense coil, to produce the angular rate signal. An A.C. amplifier 46 is provided to amplify the output of sense coil 31 for application to a synchronous AM demodulator 47. A phase reference signal is supplied to demodulator 47 from a comparator 48, which receives an amplified resonance coil signal from amplifier 49, which receives an input from the resonance coil 32. The output of demodulator 47 is passed through low pass filter 50, which removes components at that signal above a predetermined threshold, and then D.C. amplified in an amplifier 51, to produce the angular rate sense (ARS) signal.

Rectifier 57, D.C. bias 52, summing junction 53, integrator 54, and multiplier 55 form an automatic gain control for the system. Current driver 56 and the automatic gain control form the resonant drive circuit which receives the amplified resonant coil signal and adjusts the drive current to drive coil 30 to maintain the vibrating element in vibration at a frequency substantially at its resonant frequency. Of course, alternate analog or digital circuits may be employed to accomplish these functions, as those skilled in the art are aware. For example, another resonance drive circuit which may be utilized in conjunction with the apparatus disclosed in Figure 1 to control the drive resonance of element 20 is disclosed in US patent No. 4,479,098 dated October 23, 1984.

In operation, tines 21 and 22 are maintained in complementary motion, (ie, the tines move toward and away from each other simultaneously), at their resonant frequency by the application of an alternating drive current from drive 56 to drive coils 30a & b, which are wound oppositely or differentially to produce simultaneously opposite magnetic fields in response to the drive current. It has been found that since the magnetic fields produced by drive coils 30a & b are directly proportional to the input current, high peak current should be avoided, no matter how short, or else demagnetization of tines 21 and 22 may occur, which in turn will degrade the operating characteristics of the sensor.

To this end it has been found preferable to use a square wave drive current to as great of an extent possible given the counteracting inductance of the drive coils. Also to this end, drive coils 30a & b are located at the free ends 23 and 24 of tines 21 and 22 to provide the maximum mechanical advantage obtainable in driving the tines, which provides for a reduction in the required drive current.

In order to maintain tines 21 and 22 at their natural resonant frequency of vibration in the - drive plane XZ, the application of drive current to coils 30a & b must be frequency adjusted or modulated by feedback and the resonant driver circuitry as shown in Figure 6. Coils 32 sense frequency and the amplitude of vibration in the XZ or drive plane. However, if desired resonance coils 32a & b may be omitted, and the drive resonance may be detected using the back electromotive force (EMF) of the drive coils 30 & b. Or, since the resonance coils 32a & b detect low flux levels and do not produce any significant interference for the sense coils, it is possible to combine the resonance coils in the sense coil assembly 31.

In operation, electrical currents are induced in resonance coils 32a & b of amplitude in proportion to the amplitude of vibration of tines 21 and 22 and of frequency in synchrony with the frequency of vibration of tines 21 and 22. The current induced in resonance coils 32a & b, which are wound differentially as in the case of coils 30, is then, as shown in Figure 6, utilized to control the input currents to drive coils 30a & b, whereby tines 21 and 22 may be maintained in vibration at their resonant frequency, which results in a predetermined amplitude of vibration.

With tines 21 and 22 each vibrating at their resonant frequency, the symmetry of element 20 causes the base support and in particular the Z axis of symmetry of that base support 12 to be the node of the system vibration, such that no significant vibrational energies are conducted out of the sensor into either the remaining structure of the sensor or to the external environment. Moreover, tines 21 and 22 are preferably spaced at a distance less than one tenth the wave-length of sonic radiation generated at their resonant frequency.

In this manner, acoustic energy developed by the tines is effectively cancelled. Thus, element 20 is configured in order to substantially eliminate the propagation of vibrational or acoustical energy out of the system, and thus substantially eliminate reflection of those energies back into the system, and thereby reduce angular rate sensing errors which may be introduced thereby. However, because an ideal interface between element 20 and base support 12 is not practical over wide ranges of temperature due to the necessity of utilizing different materials for each, discontinuities at that interface caused by imperfections therein can result in the reflection of vibrational noise back into the sensor. Therefore, stress relief notches 60 and 61 are provided on opposite sides of element 20 in order to isolate, as much as possible, the operational stresses associated with the vibratory nodes of tines 21 and 22 from the mounting interface of element 20 with base support 12. In practical effect, relief notches 60 and 61 move the vibratory node of element 20 toward the free end of the element, and thus relieve stress on the mounting interface. This feature of element 20 has been found to substantially reduce reflections due to imperfections in the interface.

As mentioned above, coils 31a & b serve as the sense coils for sensing motions of tines 21 and 22 transverse to the drive plane, and are oriented with their gap parallel to the plane of the elements and as close to the free ends 23 and 24 of the elements as practical. Although this location along tines 21 and 22 exhibits less movement (i.e. amplitude) in the plane transverse to the drive plane than at the free ends of the tines in response to applied angular rates, this loss of sensitivity can be compensated for by providing more coil turns in coils 31a & b, a greater element magnetic field about points 25 and 26, or a smaller gap between the coils.

In the absence of angular rates of turn and assuming proper alignment of sense coils 31a & b, any flux passing through coils 31a & b induces currents in each of those coils of the same frequency and amplitude. Because coils 31a & b are wound differentially, as described above with respect to coils 30 and 32, there is produced a substantially net "null" angular rate output signal. However, when the sensor is rotated about the sensor's Z or sense axis, tines 21 and 22 are set in vibratory motion transverse to the drive plane by Coriolis forces. Due to the complementary motion of the tines 21 and 22 in the drive plane, the tines move toward and away opposite coils (31a & b) in synchronism. Given the opposing magnetic polarity of each tine, it may be seen then that the magnetic flux through coils 31a & b induces additive currents in a first direction as the tines move toward their outermost displaced position from the Y axis, and in a second direction when the tines move toward their innermost position with respect to the Y axis, and thus, double the output signal of a single tine system is produced. The vibratory sense motion of each of tines 21 and 22 has a frequency equal to that of the drive frequency plus and minus the angular frequency of rate of rotation. Thus, the signal produced by the sense coils 31a & b are roughly sinusoids of frequency substantially equal to that of the drive resonance frequency, and of an amplitude proportional to the magnitude of displacement of tines 21 and 22 out of the drive plane.

In addition to the increased sensitivity that the differential sensing scheme as described above produces, the arrangement also serves to reject any externally introduced linear vibrations by reason of the following. As both tines 21 and 22 have a common base support and nodal axis of vibration, externally applied linear vibrations produce a common mode motion of the elements, provided that the elements have substantially identical resonant sense motion frequencies. Given substantially equal and opposite element magnetic fields, as produced around points 25 and 26 of tines 21 and 22 respectively, sensing signals produced by such common mode motions of the elements substantially cancel each other using the above-described differential sensing technique.

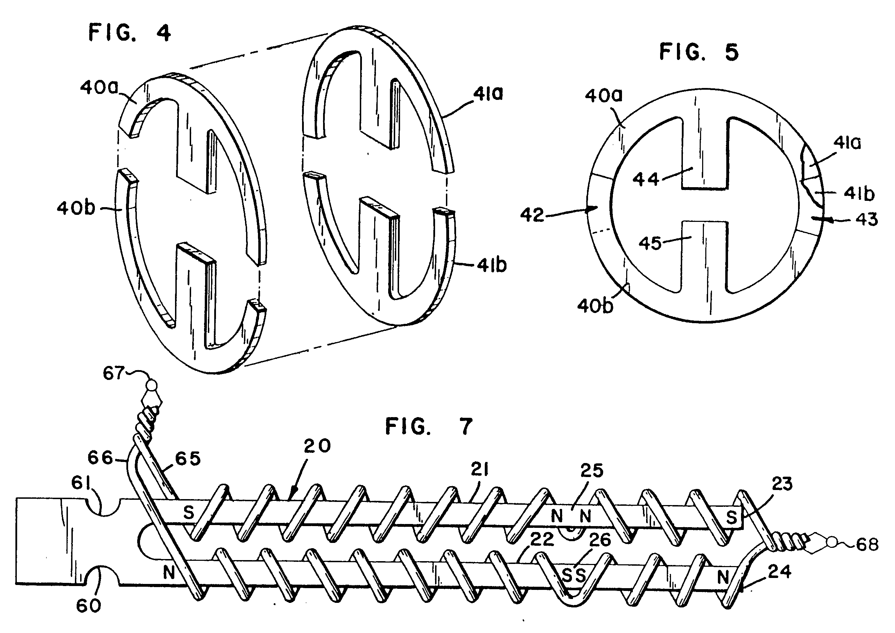

With regard to the construction of the coil assemblies, core elements 33, 34 and 35 are preferably ringshaped with two opposing inward posts as generally shown in Figures 4 and 5, but unlike the core elements shown in Figures 4 and 5, are of a one-piece construction from a nonferromagnetic or low permeability material which, of course, preferably has a relatively constant permeability over temperature, and a low or small coefficient of contraction or expansion. The nonferromagnetic qualities of the core elements substantially eliminate fluxgate magnetometer effects caused by the Earth's magnetic field, which effect is prevalent in highly permeable core elements. The use of low permeability core elements has been found to substantially reduce these effects, and thereby reduce sensing errors attributable thereto. In addition, it has been found that the cross-coupling between the coils is also reduced in this manner, whereby another source of measurement error is avoided.

As may be seen with reference to Figures 4 and 5, each of cores 33, 34 and 35 may, in the alternative, be comprised of two pairs of soft iron laminates 40a & b and 41a & b in which corresponding pairs are abutted together and layered one on top of the other in opposite orientation to provide staggered joints as designated generally in Figure 5 by numerals 42 and 43 and the two opposing inward posts 44 and 45. The result is a core with sufficient magnetic coupling around the outside to maintain the outer ring in an essentially magnetically neutral condition (thereby minimizing the radiation of magnetic fields to the other coils through the cylinder 10 etc...), when the coils on each post are oppositely energized to provide a high opposing magnetic polarity between the posts. Also, the soft iron core provides high flux levels over an extended temperature range. However, ferrite core material can, if desired, be utilized for more moderate temperature variations. Because as explained above, soft iron core elements of this type suscept the coil assembly to magnetometic fluxgate effects in the windings, they are less preferable than low permeability core elements, especially in the case of the wholly-electromagnetic embodiment of the present invention. However, in the case of the capacitive sense embodiment to be described below, iron core elements may be used for the drive coils, as there is no danger of coupling noise from this source into the sense elements.

It has been observed that because the flux passing through the coils is a square law function of the gap between the tines and the coils, certain nonlinearities, which are a function of the ratio of the change in gap between the coils and the tines divided by the normal gap magnitude, may be introduced. Fortunately, this ratio remains quite small for moderate angular rates, but at high ranges of angular rates, may result in significant nonlinearities in the sense amplitude. To this end, the present invention contemplates that the core pole pieces could be shaped to extend the linearity, or an unusually wide gap could be utilized. The same approach can also be used to linearize the drive coil operation, although generally speaking nonlinearities in the drive function do not present a problem. In addition, since in the preferred embodiment of the present invention coils 31a & b are of a copper wire, as for the other coils, which significantly changes resistance with temperature, it is preferable that a high impedance amplifier be used in the sensing circuit as described above, such that the copper resistance becomes insignificant.

Coil assemblies 30, 31 and 32 are mounted in cylinder 10 via a set of cylindrical copper spacer elements 58a, 58b, 58c and 59d, which are held in place by another copper spacer 54, and a copper cap member 14 soldered in place, which has a hole in its center through which wires may be fed. The assembly and alignment of the above-noted components in cylinder 10 will be discussed in more detail below.

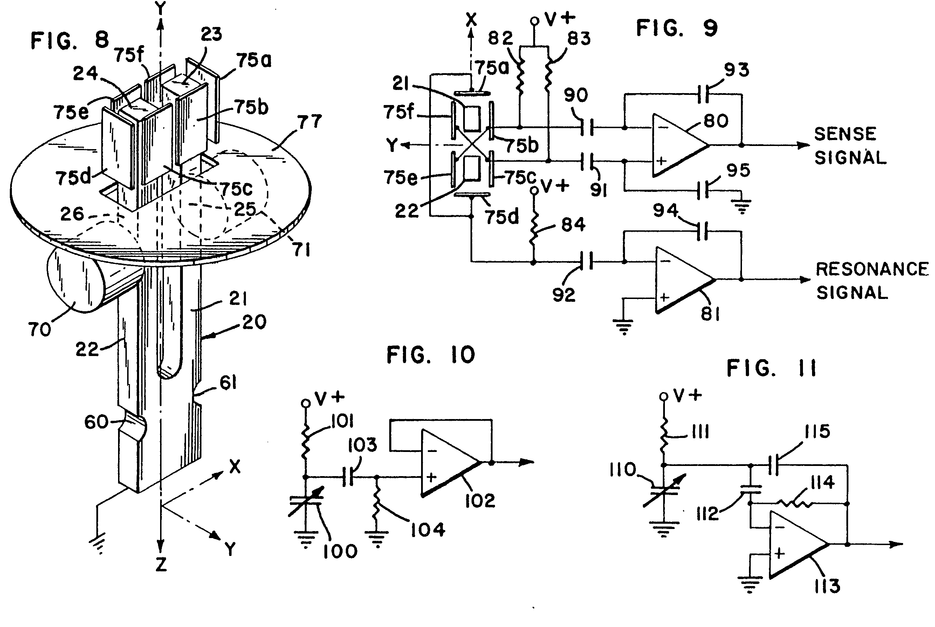

Referring now to Figure 7, the properties of vibrating element 20 and the technique for magnetizing that element will be described. Preferably, element 20 is machined from an iron-chrome-cobalt magnet material known as Arnokrome, which may be obtained from The Arnold Engineering Company, subsidiary, Magnetics & Electronic, Inc. 300 West Street, Margengo, Illinois 60152. This material has been found to possess the requisite physical qualities so as to be machinable to produce element 20 to the above-noted specifications of symmetry, to hold its dimensions over wide ranges of temperature, and to possess the requisite magnetic properties (i.e. magnetic uniformity) which are required to maintain the above-described regions of magnetization on tines 21 and 22 over a wide range of temperatures and for an extended time period. The physical properties of this material are also sufficient to allow element 20 to be machined to produce the requisite qualities of mechanical Q and drive and sense motion resonant frequencies, as will be described hereinbelow in detail. Moreover, Arnokrome has been found to have sufficient yield strength to withstand the extremely high G forces developed in gunfired environments.

The means for magnetizing element 20 comprises a pair of wires 65 and 66, which are coiled around the respective tines 21 and 22 with a reversal of each wire at the respective points 25 and 26. Thus, by the introduction of appropriate currents through wires 65 and 66 via terminals 67 and 68, the regions of magnetization described above with respect to Figure 1 are produced on tines 21 and 22. Magnetizing tines 21 and 22 in this manner not only produce high levels of surface magnetic flux at points 25 and 26, which acts to boost the levels of magnetic flux flowing through sense coils 31a & b, but in addition has been found to aid in maintaining high field strengths at the free ends 23 and 24 of the respective tines 21 and 22. This, in combination with the position of the drive coils in the case of the embodiment of Figure 1, allows smaller drive currents to be used in drive coils 30a & b in order to maintain tines 21 and 22 in complementary resonant vibration. The resultant reduction in the drive current requirement has the obvious advantage of reducing the likelihood of demagnetization of the tines (which can introduce bias errors in the sensor) but in addition results in the additional benefit of reducing cross coupling of magnetic fields from drive coils 30a & b to sense coils 31a & b, which has been found to be a particularly troublesome source of sensing error for wholly electromagnetic sensors. Relatedly, shell 10 is preferably made of copper in order to reduce magnetic coupling between the elements through the housing. However, other nonmagnetic materials can be utilized, such as a beryllium copper alloy. In any case, the most important material selection factor being the maintenance of a substantially constant magnetic coupling between the various coils over temperature and magnetic bias, in order that coupling effects maybe compensated out in a predictable manner.

Capacitive Sense Embodiment

Referring now to Figure 8, there is shown in diagrammatic form an alternate embodiment of an angular rate sensor according to the present invention. The particular mounting structure for the components shown in Figure 8 have been omitted for the sake of clarity and brevity in the drawing, but it will be understood that the same mounting techniques as described with reference to Figures 1, 2 and 3 may be used to implement the sensor of Figure 8. The orientation of the X, Y and Z axes denoted in Figure 8 corresponds to the orientation of the corresponding axes of Figures 1, 2 and 3, with respect to the vibrating element 22.

The principal differences between the sensor of Figure 8 and that of Figures 1, 2 and 3 are two. First, drive coils 70 and 71 are provided about points 25 and 26 of element 20, which is magnetized in the same manner as described with reference to Figure 7. This is in contrast with the embodiment of Figure 1 in which the drive coils 30a & b were positioned about the free ends 23 and 24 of element 20. The second principal difference is the utilization of capacitive sense elements 75a-f to sense the resonance of tines 21 and 22 in the drive plane and to sense the motion of tines 21 and 22 transverse to the drive plane, which functions were performed by coils 31a & b and 32a & b in the embodiment of Figure 1. An additional difference between the embodiments of Figure 1 and Figure 8 is the provision of a conductive low permeability shield plate 77 disposed between drive coils 70 and 71 and capacitive sense plates 75a-f. Shield plate 77 is disposed in the XY plane and mounted in a similar fashion to that discussed with respect to core pieces 33-35. While many low permeability materials would be sufficient for this purpose, in the present embodiment copper is utilized.

The capacitive sensing plates 75a-f are electrically connected as shown in Figure 9 to high impedance differential amplifiers 80 and 81. Capacitive plates 75b and 75e are electrically connected and biased to a positive potential V+ through a high resistance 82 (on the order of 10E12 ohms). Capacitive plates 75c and 75f are similarly connected and biased through another high impedance resistance 83 to V+. Capacitive plates 75a and 75d are likewise connected and also biased through a large value of resistance 84 to a positive potential V+. Capacitive plates 75b and 75e are also connected through a capacitance 90 to the inverting input of amplifier 80. Plates 75c and 75f are similarly connected through a capacitance 91 to the noninverting input of amplifier 80. Plates 75a and 75c are similarly connected through a capacitance 92 to the inverting input of amplifier 81. The output of differential amplifier 80 is connected through a feedback capacitance 93 to the inverting input thereof. The output of differential amplifier 81 is likewise connected through a feedback capacitance 94 to the inverting input thereof. The noninverting input of amplifier 80 is connected through a capacitance 95 to ground. The noninverting input of amplifier 81 is connected directly to ground. Element 20, and thus tines 21 and 22, are also connected to the same ground as the electrical components of Figure 9.

Thus, as described above, the combination of tines 21 and 22 and capacitive plates 75a-f form three separate parallel plate capacitive elements. As may be readily appreciated, the area of each of the plates of these capacitors is constant, and thus the capacitance of each capacitor varies with the distance between tines 21 and 22 and the plates coacting therewith. Furthermore, given the high impedance biasing of the charge on each of the capacitors via the potential V+ and resistors 82, 83 and 84, it will be readily understood to those skilled in the art that the voltage on each capacitor is proportional to the distance between the tines and the corresponding plates. Therefore, the complementary motion of tines 21 and 22 in the drive plane produces a periodic increase and decrease in the voltage on plates 75a & d, the period being in synchronism with the resonant frequency of the tines, which in turn is applied to amplifier 81 through capacitor 92. As may be readily realized, the output of amplifier 81, the resonance signal, varies in frequency according to the frequency of vibrations of tines 21 and 22. The resonance signal may then be used, as described above with respect to the embodiment of Figure 1, to demodulate the sense signal and to control the application of drive currents to coils 70 and 71.

Capacitive plate pairs 75b & e, and 75c & f operate to generate voltages in a similar fashion to pair 75a & d in response to angular rotation. As described above with reference to the embodiment of Figure 1, in the presence of angular rotation about the sense axis (Z) of element 20, tines 21 and 22 oscillate transverse to the drive plane at a frequency substantially in synchrony with that of the drive resonance. As tines 21 and 22 move in complementary opposing motion in the drive plane, a similar complementary opposing motion occurs transverse to the drive plane. Thus, for example, as tine 21 moves toward plates 75a and 75f, tine 22 moves toward plates 75d and 75c. Thus, in the presence of an applied angular rate of rotation, the voltages on pairs 75b & e and 75c & f rise and fall in a complementary fashion, with an amplitude proportional to the degree of displacement of tines 21 and 22 transverse from the drive plane, to produce a differential input to amplifier 80 and a sense signal output which has a magnitude proportional to the magnitude of the angular rate. This sense signal maybe demodulated as described with reference to Figures 1 and 6.

Like the magnetic sensing arrangement described with reference to Figure 1, the capacitive sensing arrangement of the embodiment of Figures 8 and 9 is differential in nature. Therefore, this arrangement also rejects common mode linear vibrations, as was the case for the electromagnetic sensing of the embodiment of Figure 1. However, the capacitive sense embodiment does not require a relatively long warm-up period like the electromagnetic sense embodiment in which there are significant start up transients or changes in the balance of the sensor's magnetic fields, which in turn distort rate measurements. Thus, the capacitive sense embodiment is preferable where short warm up is required. In addition, the capacitive sense embodiment substantially reduces sensing errors attributable to gradual demagnetization of the tines and fluxgate magnetometer effects.

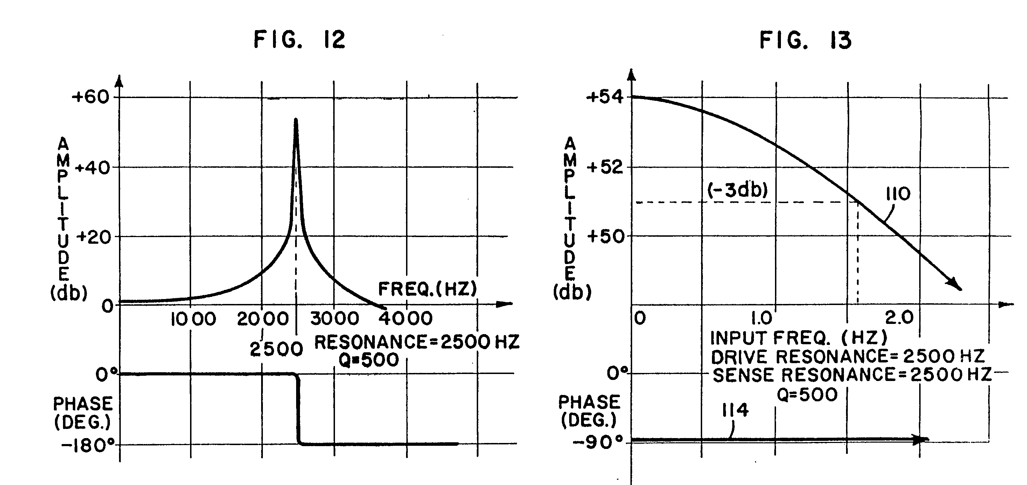

Alternate circuits for sensing variable capacitance as produced by the capacitive sensing arrangement of Figures 8 and 9, are shown in Figures 10 and 11. In Figure 10, there is shown a variable capacitance source 100, such as the capacitive sense arrangement discussed above. Capacitor 100 is biased through a large value of resistance 101 to a source of positive potential V+. A capacitor 103 connects capacitance 100 to the noninverting input of operational amplifier 102 and through a resistance 104 to ground. Amplifier 102 has its output connected to its inverting input to form a follower. In Figure 11, there is shown another circuit for detecting variable capacitance. Variable capacitance 110 is biased through a high value of resistance 111 to a positive potential V+. Capacitance 110 is connected through a capacitor 112 to the inverting input of an amplifier 113. Feedback from the output of amplifier 113 to the noninverting input thereof is provided by a resistance 114 and capacitance 115, and the noninverting input of amplifier 113 is grounded. It will be readily understood to those skilled in the art that both the circuits of Figures 10 and 11 may be implemented as is or with various minor modifications to accomplish the sensing described above with reference to Figure 9.

Although from the foregoing it is apparent that the sensing of the drive resonance or the sensing of rate of turn may be accomplished either by electromagnetic or by capacitive means, it should be appreciated that in order to preserve the phase relationship between these sense signals which are needed for demodulating the rate sense signal, that both resonance sensing and rate sensing should be accomplished by the same means, i.e., either both electromagnetic or both capacitive.

With regard to the capacitive sensing arrangement described above, there are several variations which may be implemented. For example, it is contemplated that a voltage may be applied to element 20, instead of grounding the same, and that other corresponding changes be made to the sensing circuitry as shown in Figure 9. In addition, it is contemplated that the drive sense plates, i.e., plates 75a and 75d may be eliminated and that sense information generated by those plates be derived by plates 75b, c, e and f as may be readily accomplished with additional circuitry.

Vibratory Characteristics of the Vibrating Element

Thus far there has been described above certain aspects of both embodiments of the angular rate sensor according to the present invention. More particularly, there has been described the basic operating principles of the invention, the general configuration and preferred mounting of vibrating element 20, and the particular details of the alternate means for driving and sensing the motion of element 20. There will now be described, with reference to Figures 12-15, certain aspects of element 20 relating to the preferred vibratory characteristics thereof.

A typical response curve or transfer function for a high "Q" resonant element as are typically employed in vibrating element sensors is shown in Figure 12, which is a graph of amplitude versus frequency and the phase angle response for a mechanical element (e.g. a tine) having a Q equal to 500, and a resonant frequency of 2500 Hz. For a dual vibrating tine element as described above, it should be understood that each tine has its own independent response curve.

As is well known to those skilled in the art, a vibrating tine of the type disclosed herein is characterized not only by a response curve for vibrations in the drive plane, but in addition by a response curve of vibrations transverse to the drive plane, i.e., sense motions, which are those motions detected for the purpose of rate determination. Hereinafter, the former and latter types of response curves will be referred to as the "drive response" and the "sense response".

The relationship between the drive response and the sense response is a very important aspect of all vibrating element sensors, and is critical to their usefulness and practicality. As will be seen from the following, the criticality of this important aspect has not been well understood heretofore, and thus prior art vibrating element devices of similar concept to that of the present invention have not been particularly commercially successful.

As described above, rotation of a vibrating element sensor causes the transfer of energy from the drive plane into sense motion transverse thereto, with those sense motions having a frequency substantially equal to that of the vibrations in the drive plane. Thus, the predominant teaching in the prior art has leaned toward the provision of an isotropic vibrating element, that is an element in which the resonant frequency of sense motion is equal to the resonant frequency of motion in the drive plane, thereby maximizing the amplitude of sense motion in response to angular rates of turn. In a system of this type then, the drive and sense response curves should preferably be identical. While this arrangement has appeared attractive to many skilled in the art, it has inherent limitations which, as demonstrated below, make it impractical and substantially unworkable.

The "Q" for a practical system of the herein described variety i.e. electromagnetic drive, is in the vicinity of 2500, and in the vicinity of 500 for piezoelectric systems, based on the materials typically used for each of these different types of vibrating element sensors. The following discussion will assume a worst case Q value of 500 (it should be noted that higher Q's magnify the difficulties to be described) and a resonant frequency of 2500 Hz (based on typical vibration noise spectra) for both drive and sense motions. Given these assumptions, tuning of an isotropic element system must be made to accuracies of much less than 1 Hz to match the operating responses and phase of the drive and sense response curves for adequate sensing operation.

More particularly, in terms of dynamic response, the energy transferred from the drive plane into sense motion is divided into two equal parts and is superimposed on sense motion at the drive frequency plus and minus the frequency of input exitation, i.e, the rate of rotation. This is a heterodyne response producing upper and lower sidebands. Given the above frequencies and Q factor, curves 110 and 112 of Figure 13 show that the resulting system response (demodulated) to input frequency (Hz) is lagging by 90 degrees and has a bandwidth of 1.6 H zat −3db. The fact that the D.C. response contains an almost 90 degree phase shift indicates that the output frequency of the sense motion contains a strong component of angular displacement, which is obviously undesirable. Such a response is not usable in stabilization and navigation systems which require relative wide response bandwidths and scale factor stability.

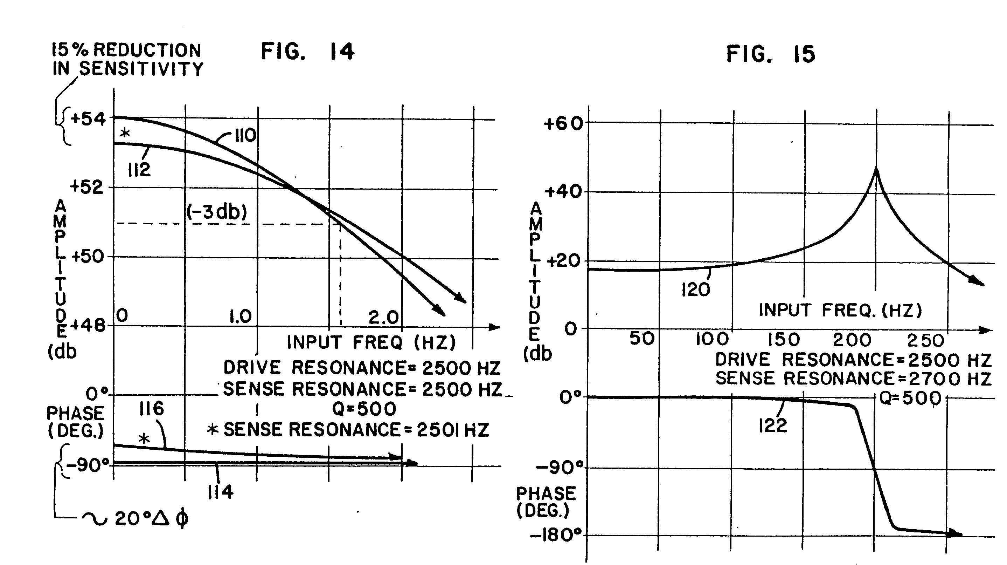

Furthermore, because the match in frequencies between the drive motion and the sense motion will have a finite error through age, temperature and other factors, and because there is such a strong inflection resonance for high Q systems, there will be strong variations in the response envelope and phase. This is demonstrated in the demodulated system response comparison of Figure 14 by showing the effect of a one (1) Hz change (.04%), from 2500 to 2501, in the resonance frequency of the sense resonance. As demonstrated by amplitude response curve 112, and by phase response curve 116, there is a 15% loss of gain and a phase shift of about 20 degrees in the phase response curve from the ideally matched system. Accordingly, relatively minor discrepancies between the drive resonance and sense resonance frequencies introduce significant errors into this system, which make the concept unusable as a practical matter. In addition, matching the resonant frequencies of drive and sense motion results in a relatively slow die out of sense motions after an angular rate has been removed, due to the tendency of the drive motion to maintain the sense motion during fadeout. Thus, the response rate bandwidth is limited.

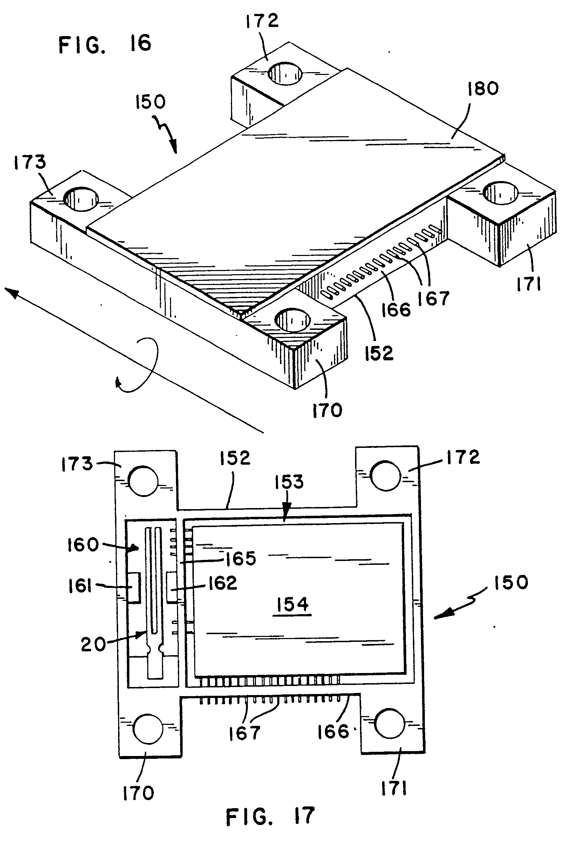

The present invention alleviates the aforementioned undesirable characteristics of prior art sensors by configuring the vibrating element to have a sense resonance of higher frequency than the drive resonance. In particular, it has been found that the sense and drive resonant frequencies should be separated in Hz about 4/3 times the desired output response bandwidth. Referring to Figure 15, there is shown the sensor response (demodulated) characteristics of the vibrating element sensor of the present invention in which the drive resonance occurs at 2500 Hz and the sense resonance at 2700 Hz, with a Q equal to 500. As may be seen from curves 120 and 122 in Figure 15, the sensor has a bandwidth reasonably usable to over 150 Hz. Moreover, due to the frequency separation between the drive and sense motions, the sensivity to shifts in resonant frequencies as between those motions is greatly reduced also. Accordingly, the vibrating element sensor according to the present invention is reliable over much wider spans of temperature and age, and has a much wider usable bandwidth, and thus is useful in a much wider range of applications.

Coil and Capacitive plates Assembly and Alignment

The assembly into cylinder 10 and alignment of the drive, sense and resonance elements with respect to the vibrating element is accomplished as follows. With the base of element 20 immoveably mounted within cylinder 10 via base support 12, the drive, sense and resonance elements (either the electromagnetic or capacitive) are inserted from the other end of cylinder 10 and visually aligned. Tines 21 and 22 are then driven to vibrate in the drive plane at the resonant frequency of sense motion via the electromagnetic drive coils (30a & b for the embodiment of Figure 1 or coils 70 and 71 for the embodiment of Figure 8). The drive coils are then rotated or aligned to null sense motions, which may be monitored via the sense signal output. Thus, the drive coils are aligned to produce a minimum of sense motion drive.

Next, tines 21 and 22 are driven at the drive plane resonant frequency, and the sense elements are aligned. In the case of the embodiment of Figure 1 the sense coils 31 are rotated or aligned to the point of minimum cross-talk between the drive coils and the sense coils. In the case of the capacitive sense embodiment of Figure 8 the sense plates are aligned to null the sense output signal. The alignment of the resonance elements in either embodiment is not critical and may be done visually.

Sensor Housing

Referring now to Figures 16 and 17 there shown the preferred housing for the angular right sensor according to the present invention for use in high G-force environments. Housing 150 comprises a machined rectangular case 152 which includes a first compartment 153 within which a circuit board or hybrid circuit 154 may be mounted. A second compartment 160 is also provided, within which vibrating element 20 and associated driving and sensing elements, for example elements 161 and 162, may be mounted.

Circuit board 154 is electrically connected through terminations in a wall 165, between compartments 153 and 160, to the various electrical components of the angular rate sensor apparatus in compartment 160. On circuit board 154 there may be mounted the various electrical components necessary to the operation of sensor 20, and the outputs and inputs to these circuits may be made through wall 166 via leads 167.

Case 152 includes four mounting tabs 170—173 each of which includes an aperture through which casing 152 may be bolted in place in the device in which it is utilized. A lid 180 is provided to cover compartments 153 and 160, and is braised or welded in place, to provide a substantially hermetically sealed environment.

**Claims**

1. An angular rate sensor comprising:

(a) a vibrating element having a base end and a pair of elongate tines extending therefrom to a free end of said element, said base end forming a nodal axis of vibrational energy for said tines, said element being fabricated to permit vibration of said tines in a drive plane of motion at a drive resonant frequency and to permit vibration of said tines transverse to said drive plane motion at a sense resonant frequency;

(b) drive means selectively energizable for vibrating said tines in opposition relative to one another in the drive plane of motion at said drive resonant frequency;

(c) sensing means for producing an output signal in response to opposing sense motions of said tines occurring transverse to the drive plane, said output being representative of the rate of turn of said vibrating element along a central longitudinal axis thereof, characterized in that said element is fabricated such that said sense resonant frequency is substantially greater than said drive resonant frequency.

2. An angular rate sensor according to claim 1 wherein said element is fabricated such that said sense resonant frequency is greater than said drive resonant frequency by an amount approximately 4/3 times the desired output response bandwidth of the sensor.

3. An angular rate sensor according to claim 1 wherein said vibrating element is notched on opposite sides of said base to isolate vibrational stresses in said element from said base.

4. An angular rate sensor according to claim 1 wherein said tines are magnetized so that each one includes first and second regions of oppositely polarized magnetization and so that said first and second regions are oppositely polarized as between corresponding regions of said tines, said first region encompassing the free ends of said tines and extending to join said second region at a location along said tines between said base end and said free end, said second region extending from said junction to near said base end.

5. An angular rate sensor according to claim 4 wherein said element is fabricated from material having homogeneous magnetic properties.

6. An angular rate sensor according to claim 5 wherein said element is fabricated from an iron-chrome-cobalt alloy.

7. An angular rate sensor according to claim 4 wherein said drive means and said sensing means are electromagnetic and each include wire coils for producing and sensing magnetic fields respectively, to move said tines and sense the movement of said tines by interaction with the magnetic fields generated about the free end of said element and the magnetic fields generated about the junction of said first and second regions, respectively.

8. An angular rate sensor according to claim 7 wherein said electromagnetic drive means are selectively energizable for vibrating said tines in opposition relative to one another in the drive plane of motion at said drive resonant frequency, said drive means being situated near the free ends of said tines to interact with one pole of each of said first regions of magnetization; and said electromagnetic sensing means situated near the junction of said first and second regions of magnetization for producing an output current signal in response to opposing sense motions of said tines occurring transverse to the drive plane, said output current being representative of the rate of turn of said vibrating element along a central longitudinal axis thereof.

9. An angular rate sensor according to claim 7 or 8 wherein said coils each includes a low permeability core so that fluxgate magnetometer effects are avoided.

10. An angular rate sensor according to claim 1 wherein said sensing means include a plurality of capacitive plates situated about the free end of said element to sense variations in the distance between the tines and the plates in a direction transverse to said drive plane, and wherein said drive means is electromagnetic and is positioned about said element between said free end and said base end.

11. An angular rate sensor according to claim 7 wherein said electromagnetic drive means are situated near the base ends of said tines, and said electromagnetic sensing means are situated near the free ends of said tines.

12. An angular rate sensor according to claim 4 wherein the drive means are electromagnetic and are situated about the free end of said element; and the sensor further comprising means situated near the junctions of said first and second regions of magnetization for sensing the magnetic flux thereabout to produce a sensed output signal in response to a change by said tines from their drive plane of motion.

13. An angular rate sensor according to claim 4 wherein the drive means are electromagnetic and are situated near the junction of said first and second regions of magnetization; and wherein the sense means are capacitive and situated along said tines.

14. An angular rate sensor according to claim 13 wherein said capacitive sensing means includes two pairs of plates, one plate of each pair positioned adjacent different ones of said elements on the same sides thereof in a plane parallel to said first plane, and the other plate of each pair positioned on the other sides of said elements in a plane parallel to said first plane and adjacent the opposite one of said element that said one plate is adjacent, each pair of plates electrically connected together to first and second inputs of a differential sensing means for producing said sensed output signal.

15. An angular rate sensor according to claim 14 wherein further capacitive sensing means are provided to sense the movement of said elements in said first plane of opposing motion and produce a representative signal.

**Patentansprüche**

1. Drehgeschwindigkeitssensor, umfassend:

(a) ein Schwingelement mit einem Basisende und zwei davon zu einem freien Ende des Elements abgehenden langgestreckten (Gabel-) Zinken, wobei das Basisende eine Knotenpunktachse der Schwingungsenergie für die Zinken bildet und das Element so ausgebildet ist, daß es eine Schwingung der Zinken in einer Antriebs- oder Anregungsebene der Bewegung auf einer Anregungs-Resonanzfrequenz und eine Schwingung der Zinken quer zur Anregungsebenenbewegung auf einer Meß-Resonanzfrequenz zuläßt,

(b) selektiv erregbare oder aktivierbare Antriebs- bzw. Anregungseinheiten zum Schwingenlassen der Zinken entgegengesetzt bzw. gegensinnig zueinander in der Anregungsebene der Bewegung auf der Anregungs-Resonanzfrequenz, (und)

(c) Meßeinheiten zum Erzeugen eines Ausgangssignals in Abhängigkeit von den quer zur Anregungsebene auftretenden gegensinnigen Bewegungen der Zinken, wobei das Ausgangssignal für die Geschwindigkeit der Drehung des Schwingelements längs einer zentralen Längsachse desselben repräsentativ ist, dadurch gekennzeichnet, daß das Element so gefertigt bzw. geformt ist, daß die Meß-Resonanzfrequenz wesentlich größer ist als die Anregungs-Resonanzfrequenz.

2. Drehgeschwindigkeitssensor nach Anspruch 1, dadurch gekennzeichnet, daß das (Schwing)-Element so gefertigt bzw. geformt ist, daß die Meß-Resonanzfrequenz um eine Größe entsprechend etwa dem 4/3-fachen der gewünschten Ausgangsansprech-Bandbreite des Sensors größer ist als die Anregungs-Resonanzfrequenz.

3. Drehgeschwindigkeitssensor nach Anspruch 1, dadurch gekennzeichnet, daß das Schwingelement auf gegenüberliegenden Zeiten eingekerbt ist zum Trennen von im Element auftretenden Schwingungsspannungen von der Basis.

4. Drehgeschwindigkeitssensor nach Anspruch 1, dadurch gekennzeichnet, daß die Zinken so magnetisiert sind, daß jede Zinke erste und zweite Bereiche entgegengesetzt polarisierter (gepolter) Magnetisierung aufweist und die ersten und zweiten Bereiche zwischen entsprechenden Bereichen der Zinken entgegengesetzt polarisiert sind, daß der erste Bereich die freien Enden der Zinken umfaßt und an einer zwischen Basisende und freiem Ende liegenden Stelle längs der Zinken in den zweiten Bereich übergeht und daß der zweite Bereich sich von der Übergangsstelle bis nahe zum Basisende erstreckt.

5. Drehgeschwindigkeitssensor nach Anspruch 4, dadurch gekennzeichnet, daß das Element aus einem Werkstoff homogener magnetischer Eigenschaften hergestellt ist.

6. Drehgeschwindigkeitssensor nach Anspruch 5, dadurch gekennzeichnet, daß das Element aus einer Eisen-Chrom-Kobalt-Legierung hergestellt ist.

7. Drehgeschwindigkeitssensor nach Anspruch 4, dadurch gekennzeichnet, daß die Anregungseinheiten und die Meßeinheiten elektromagnetische Einheiten sind und jeweils Drahtspulen zum Erzeugen bzw. Messen (Abgreifen) von Magnetfeldern aufweisen, um die Zinken zu bewegen und die Bewegung der Zinken durch Wechselwirkung mit den um das freie Ende des Elements herum erzeugten Magnetfeldern und den um die Übergangsstelle der ersten und zweiten Bereiche erzeugten Magnetfeldern zu messen.

8. Drehgeschwindigkeitssensor nach Anspruch 7, dadurch gekennzeichnet, daß die elektromagnetischen Anregungseinheiten selektiv erregbar sind zum zueinander gegensinnigen Schwingenlassen der Zinken in der Anregungsebene der Bewegung auf der Anregungs-Resonanzfrequenz, wobei die Anregungseinheiten nahe der freien Enden der Zinken angeordnet sind, um in Wechselwirkung mit einem Pol jedes der ersten Magnetisierungsbereiche zu treten, und die elektromagnetischen Meßeinheiten nahe der Übergangsstelle der ersten und zweiten Magnetisierungsbereiche angeordnet sind zwecks Erzeugung eines Ausgangsstromsignals in Abhängigkeit von den quer zur Anregungsebene auftretenden gegensinnigen Meßbewegungen der Zinken, wobei der Ausgangsstrom repräsentativ ist für die Geschwindigkeit der Drehung des Schwingelements längs einer zentralen Längsachse desselben.

9. Drehgeschwindigkeitssensor nach Anspruch 7 oder 8, dadurch gekennzeichnet, daß die Spulen jeweils einen Kern niedriger Permeabilität aufweisen, so daß Magnetfeldmessereffekte vermieden werden.

10. Drehgeschwindigkeitssensor nach Anspruch 1, dadurch gekennzeichnet, daß die Meßeinheiten eine Anzahl von um das freie Ende des Elements herum angeordneten kapazitiven Platten zum Messen von Änderungen im Abstand zwischen den Zinken und den platten in einer Richtung quer zur Anregungsebene aufweisen und daß die Anregungseinheit(en) elektromagnetisch ist (sind) und zwischen dem freien Ende und dem Basisende um das Element herum angeordnet ist (sind).

11. Drehgeschwindigkeitssensor nach Anspruch 7, dadurch gekennzeichnet, daß die elektromagnetischen Anregungseinheiten nahe dem Basisende der Zinken angeordnet sind und daß die elektromagnetischen Meßeinheiten nahe der freien Enden der Zinken angeordnet sind.

12. Drehgeschwindigkeitssensor nach Anspruch 4, dadurch gekennzeichnet, daß die Anregungseinheiten elektromagnetische Einheiten sind, die um das freie Ende des Elements herum angeordnet sind, und daß der Sensor nahe der Übergangsstelle der ersten und zweiten Magnetisierungsbereiche befindliche Mittel zum Messen des Magnetflusses um diesen Bereich herum aufweist, um ein Meßausgangssignal in Abhängigkeit von einer Änderung (oder Abweichung) der Zinken von ihrer Anregungsebene der Bewegung zu erzeugen.

13. Drehgeschwindigkeitssensor nach Anspruch 4, dadurch gekennzeichnet, daß die Anregungseinheiten elektromagnetische Einheiten sind, die nahe der Übergangsstelle der ersten und zweiten Magnetisierungsbereiche angeordnet sind, und daß die Meßeinheiten kapazitive, längs der Zinken angeordnete Einheiten sind.

14. Drehgeschwindigkeitssensor nach Anspruch 13, dadurch gekennzeichnet, daß die kapazitiven Meßeinheiten zwei Plattenpaare aufweisen, von denen eine Platte jedes paars neben verschiedenen der Elemente auf der gleichen Seite derselben in einer Ebene parallel zur ersten Ebene positioniert ist und die andere Platte jedes Paars auf den anderen Seiten der Elemente in einer Ebene parallel zur ersten Ebene und neben dem gegenüberliegenden einen Element, dem die eine Platte benachbart ist, positioniert ist, und daß jedes Plattenpaar zusammen elektrisch mit ersten und zweiten Eingängen einer Differential-Meßeinheit zum Erzeugen des Meßausgangssignals verbunden ist.

15. Drehgeschwindigkeitssensor nach Anspruch 14, dadurch gekennzeichnet, daß weiterhin kapazitive Meßeinheiten vorgesehen sind zum Messen der Bewegung der Elemente in der ersten Ebene der gegensinnigen Bewegung und zum Erzeugen eines repräsentativen Signals.

**Revendications**

1. Capteur de vitesse angulaire comprenant:

(a) un élément vibrant ayant une extrémité de base et une paire de fourchons allongés s'étandant à partir d'elle jusqu'à l'extrémité libre de l'élément, l'extrémité de base formant un axe nodal d'énergie vibratoire pour les fourchons, l'élément étant fabriqué de maniere à permettre la vibration des fourchons dans un plan de commande de mouvement à une fréquence de résonance de commande et à autoriser les vibrations des fourchons transversalement au mouvement du plan de commande, à une fréquence de résonance de détection;

(b) des moyens de commande pouvant être excités sélectivement pour faire vibrer les fourchons en opposition l'un par rapport à l'autre dans le plan de commande de mouvement à la fréquence de résonance de commande;

(c) des moyens de détection pour produire un signal de sortie en réponse aux mouvements opposés de détection des fourchons se produisant transversalement au plan de commande, la sortie étant représentative de la vitesse de rotation de l'élément vibrant suivant son axe longitudinal central, caractérisé en ce que l'élément est fabriqué de façon que la fréquence de résonance de détection soit sensiblement supérieur à la fréquence de résonance de commande.

2. Capteur de vitesse angulaire selon la revendication 1, dans lequel l'élément est fabriqué de façon que la fréquence de résonance de détection soit supérieur à la fréquence de résonance de commande suivant une quantité approximativement égale à 4/3 fois la largeur de bande de la réponse de sortie désirée du détecteur.

3. Capteur de vitesse angulaire selon la revendication 1, dans lequel l'élément vibrant est entaillé sur les côtés opposés de la base pour isoler de celle-ci les contraintes de vibration dans l'élément.

4. Capteur de vitesse angulaire selon la revendication 1, dans lequel des fourchons sont aimantés de façon que chacun comprenne des première et seconde zones d'aimantation à polarisation opposée et que les première et seconde zones soient polarisées de façon opposée, par exemple entre des zones correspondantes des fourchons, la première zone comprenant les extrémités libres des fourchons et s'étandant jusqu'à rejoindre la seconde zone à un emplacement situé le long des fourchons entre l'extrémité de base et l'extrémité libre, la seconde zone s'étandant à partir de la jonction jusqu'à proximité de l'extrémité de base.

5. Capteur de vitesse angulaire selon la revendication 4, dans lequel l'élément est fabriqué avec un matériau ayant des propriétés magnétique homogènes.

6. Capteur de vitesse angulaire selon la revendication 5, dans lequel l'élément est fabriqué en alliage de fer-chrome-cobalt.

7. Capteur de vitesse angulaire selon la revendication 4, dans lequel les moyens de commande et les moyens de détection sont électromagnétiques et comprennent chacun des bobines de fil pour produire et détecter des champs magnétiques respectivement, afin de déplacer les fourchons et détecter le mouvement des fourchons par interaction avec les champs magnétiques développés autour de l'extrémité libre de l'élément et les champs magnétiques produits autour de la jonction des première et seconde zones, respectivement.

8. Capteur de vitesse angulaire selon la revendication 7, dans lequel les moyens électromagnétiques de commande peuvent être excités de façon sélective de manière à faire vibrer les fourchons en opposition l'un par rapport à l'autre dans le plan de commande de mouvement à la fréquence de résonance de commande, les moyens de commande étant situés à proximité des extrémités libres des fourchons pour interagir avec un pôle de chacune des premières zones d'aimantation; et les moyens électromagnétiques de détection situés à proximité de la jonction des première et seconde zones d'aimantation pour produire un signal de courant de sortie en réponse aux mouvement opposés de détection des fourchons se produisant transversalement au plan de commande, le courant de sortie représentant la vitesse de rotation de l'élément vibrant suivant son axe longitudinal central.

9. Capteur de vitesse angulaire selon la revendication 7 ou la revendication 8, dans lequel les bodines comprennent chacuner un noyau de faible perméabilité de sorte qu'on évite les effets d'une sonde magnétométrique.

10. Capteur de vitesse angulaire selon la revendication 1, dans lequel les moyens de détection comprennent une multitude de plaques capacitives situées autour de l'extrémité libre de l'élément afin de détecter les variations de la distance entre les fourchons et les plaques dans une direction transversale au plan de commande, et dans lequel le moyen de commande est électromagnétique et est placé autour de l'élément entre l'extrémité libre et l'extrémité de base.

11. Capteur de vitesse angulaire selon la revendication 7, dans lequel les moyens électromagnétique de commande sont situés à proximité des extrémités de base des fourchons, et les moyens électromagnétiques de détection sont situés à proximité des extrémités libres des fourchons.

12. Capteur de vitesse angulaire selon la revendication 4, dans lequel les moyens de commande sont électromagnétiques et sont situés autour de l'extrémité libre de l'élément; et le détecteur comprend en outre des moyens situés à proximité des jonctions des première et seconde zones d'aimantation afin de détecture le flux magnétique dans le voisinage et produire un signal détecté de sortie en réponse à changement par les fourchons par rapport à leur plan de commande de mouvement.

13. Capteur de vitesse angulaire selon la revendication 4, dans lequel les moyens de commande sont électromagnétiques et sont situés à proximité de la jonction des première et seconde zones d'aimantation, et dans lequel les moyens de détection sont capacitifs et situés le long des fourchons.

14. Capteur de vitesse angulaire selon la revendication 13, dans lequel les moyens de détection capacitifs comprennent deux paires de plaques, une plaque de chaque paire étant placée à un endroit contigu à des éléments différentes parmi lesdits éléments sur leurs mêmes côtés dans un plan parallèle au premier plan, et l'autre plaque de chaque paire se trouvant sur les autres côtés des éléments dans un plan parallèle au premier plan et contigu à l'élément opposé desdits éléments auquel la première plaque est contiguë, chaque paire de plaques étant connectée électriquement à des première et seconde entrées d'un moyen de détection différentiel pour produire le signal détecté de sortie.

15. Capteur de vitesse angulaire selon la revendication 14, dans lequel d'autres moyens de détection capacitifs sont prévus pour détecter le mouvement des éléments dans le premier plan de mouvement opposé et produire un signal représentatif.

FIG. 1

FIG. 2

FIG. 3

1

FIG. 4

40a
40b

41a
41b

FIG. 5

40a
42
40b

44
45

41a
41b
43

FIG. 7

67
66
65
61
60

20
21
25
23

S
N

N N
S S

S
N

22
26

24
68

EP 0 171 378 B1

FIG. 6

SENSE COIL — 31

A.C. AMP — 46

SYNCHRONOUS AM DEMODULATOR — 47

LOW PASS FILTER — 50

DC AMP — 51

ARS SIGNAL

RESONANCE COIL — 32

A.C. AMP — 49

COMPARATOR — 48

RECTIFIER — 57

DC BIAS — 52

— 53

INTEGRATOR — 54

MULTIPLIER — 55

CURRENT DRIVER — 56

RESONANCE DRIVER

DRIVE COIL — 30

FIG. 8

FIG. 9

FIG. 10

FIG. 11

SENSE SIGNAL

RESONANCE SIGNAL

EP 0 171 378 B1

## FIG. 12

AMPLITUDE (db)

+60
+40
+20
0

FREQ.(HZ)

1000   2000   3000   4000

2500

RESONANCE = 2500 HZ
Q=500

PHASE (DEG.)

0°
-180°

## FIG. 13

AMPLITUDE (db)

+54
+52
+50

(-3db)   110

INPUT FREQ. (HZ)
DRIVE RESONANCE = 2500 HZ
SENSE RESONANCE = 2500 HZ
Q=500

0   1.0   2.0

PHASE (DEG.)

0°
-90°

114

EP 0 171 378 B1

FIG. 14

15% REDUCTION IN SENSITIVITY

DRIVE RESONANCE = 2500 HZ
SENSE RESONANCE = 2500 HZ
Q = 500
* SENSE RESONANCE = 2501 HZ

~ 20° Δφ

FIG. 15

DRIVE RESONANCE = 2500 HZ
SENSE RESONANCE = 2700 HZ
Q = 500

EP 0 171 378 B1

FIG. 16

FIG. 17